# EUROPÄISCHE PATENTSCHRIFT

(11) **EP 0 585 916 B1**
(45) Veröffentlichungstag und Bekanntmachung des Hinweises auf die Patenterteilung: **01.03.2000**
(21) Anmeldenummer: 93114031.3
(22) Anmeldetag: 02.09.1993
(51) Int. Cl.: G08G 1/017, G06K 9/20

(54) **Einrichtung zur Erfassung von Zeichen auf Objekten, insbesondere von Buchstaben und Ziffern auf Nummernschildern von Kraftfahrzeugen**
Device for the recognition of signs on objects, in particular for characters and ciphers on number plates of vehicles
Dispositif pour la reconnaissance de signes sur objets, en particulier pour lettres et chiffres sur plaques d'immatriculation de véhicules

(30) Priorität: 03.09.1992 AT 176392
(43) Veröffentlichungstag der Anmeldung: 09.03.1994
(73) Patentinhaber: ALCATEL, 75008 Paris (FR)
(72) Erfinder: Schweitzer, Karl, 6300 Angerberg (AT); Zeindl, Gerhard, 6230 Kramsach (AT)
(74) Vertreter: Krause, Peter

(56) Entgegenhaltungen:
- WO-A-90/14640
- 41ST IEEE VEHICULAR TECHNOLOGY CONFERENCE,MAY 19-22,1991 IEEE US Seiten 798 - 804 KENJI KANAYAMA ET AL 'DEVELOPMENT OF VEHICLE-LICENSE NUMBER RECOGNITION SYSTEM USING REAL-TIME PROCESSING AND ITS APPLICATION TO TRAVEL-TIME MEASUREMENT'

## Beschreibung

Die Erfindung betrifft eine Einrichtung Zur Erfassung von Zeichen auf Objekten, insbesondere von Buchstaben und Ziffern auf Nummernschildern von Kraftfahrzeugen, mit einer Aufzeichnungseinrichtung zum Aufzeichnen eines die Zeichen enthaltenden Bildes, vorzugsweise Grauwertbildes, wobei die Aufzeichnungseinrichtung zumindest eine Videokamera aufweist, die an eine automatische Bildauswertschaltung angeschlossen ist, wobei die Einrichtung derart ausgebildet oder gesteuert ist, daß sie vom selben Objekt zumindest zwei Bilder aufnimmt und in der Bildauswertschaltung auswertet, und die Einrichtung eine Zeichenerkennungseinrichtung zum Umsetzen der Zeichen in den Bildern in digital kodierte Bildzeichen umfaßt.

Es ist bereits bekannt, zur Erfassung von Bildzeichen, insbesondere von Buchstaben- und Ziffernfolgen auf Nummernschildern von Kraftfahrzeugen diese zu fotografieren und die Bilder dann händisch auszuwerten. Damit ist jedoch ein großer Personal- und Zeitaufwand verbunden, welcher in der Praxis dazu geführt hat, daß beispielsweise bei Radaranlagen oder Rotlichtüberwachungen aufgenommene Bilder gar nicht ausgewertet werden. Damit geht natürlich der angestrebte Überwachungseffekt verloren. Es ist bereits auch bekannt, Videokameras einzusetzen und damit eine automatische Auswertung bzw. Weiterverarbeitung der erfaßten Zeichen zu ermöglichen. Verfahren zur Zeichenerkennung (OCR = optic character recognition) sind ebenfalls an sich bereits bekannt. Es geht dabei darum, anhand von typischen Merkmalen der Zeichen diese zu klassifizieren und einem bestimmten Zeichen aus einem Zeichenvorrat zuzuordnen. Bisher wurden solche Schrifterkennungsverfahren hauptsächlich zur reinen Zeichenerkennung auf einem Blatt Papier eingesetzt, auf diesem Blatt Papier liegen die Schriftzeichen bereits in idealer Form in Schwarz auf weißem Hintergrund vor. Während die Zeichenerfassung im Laborversuch bei idealen Zeichenformen grundsätzlich bereits funktioniert, sieht die praxis jedoch anders aus. Hier geht es unter anderem darum, trotz ungünstiger Beleuchtungsverhältnisse unter anderem (insbesondere im Freien) und trotz nicht idealer Zeichen (z.B. wegen Verschmutzung) dennoch eine möglichst hohe Erkennungsrate zu erzielen.

In der WO 90/14640 ist eine optische Fahrzeugerkennungseinrichtung beschrieben, bei der eine oder mehrere Kameras vorgesehen sind und jedes Fahrzeug eine Identifikationsplakette aufweist. Die Plakette wird von den Kameras aufgenommen und der darauf befindliche Kode ausgewertet, wodurch anschließend, z.B. über einen Schranken, eine Einfahrt, z.B. in eine öffentliche Garage, gewährt wird.

In dem Artikel von der 41st IEEE Vehicular Technology conference ist ein Verfahren zur Erfassung und Auswertung von Zeichen auf Kraftfahrzeugnummernschildern beschrieben. Dabei kann es durch verschmutzte oder beschädigte Nummernschilder zur fehlerhaften Erfassung von Kraftfahrzeugkennzeichen kommen.

Die Aufgabe der Erfindung besteht nun darin, den obigen Nachteil zu vermeiden und die Sicherheit der richtigen Erfassung von Zeichen auf bewegten Objekten, insbesondere auf Nummernschildern von Kraftfahrzeugen, wesentlich zu erhöhen.

Die Aufgabe wird durch die Erfindung gelöst, welche dadurch gekennzeichnet ist, daß die Zeichenerkennungseinrichtung für jedes Bildzeichen in den zwei oder mehreren Bildern jeweils die Wahrscheinlichkeit bewertet, mit der das Bildzeichen mit einem oder mehreren digital kodierten Zeichen übereinstimmt, und daß die Zeichenerkennungseinrichtung zu jedem Bildzeichen jenes digital kodierte Zeichen ausgibt, bei dem die Summe der Wahrscheinlichkeiten aus den zwei oder mehreren Bildern am Größten ist. Dadurch wird die Fehlerhäufigkeit bei der optischen Erkennung von Kraftfahrzeugen praktisch auf Null reduziert. Dies ist besonders beim automatischen 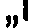 road pricing" wichtig, da durch falsche Erkennung des Kfz-Kennzeichens es zu Problemen bei der Gebührenentrichtung kommt. Die entsprechende Gebühr müßte bei einer fehlerhaften Kennzeichenerkennung ein Kfz-Besitzer bezahlen, der zu diesem Zeitpunkt die gebührenpflichtige Straße nicht benützt hat.

Weitere vorteihafte Ausgestaltungen gehen aus den Merkmalen der Unteransprüche hervor.

Von den aufgenommenen Zeichen, beispielsweise von den Zahlen- und Buchstabenfolgen auf Nummernschildern von Kraftfahrzeugen wird ein digital, vorzugsweise im allgemeinen üblichen ASCII-Code codiertes Zeichen bzw. eine Zeichenfolge ausgegeben, wobei beispielsweise pro Zeichen ein Byte mit 8 Bit ausreicht. Diese digital bzw. binärcodierten Zeichen können leicht auf die verschiedensten Arten und Weisen in üblichen Datenverarbeitungsanlagen weiterverarbeitet werden.

Bevorzugt werden dazu die in einem Videospeicher zwischengespeicherten Grauwertbilder mittels eines programmgesteuerten Videoprozessors abgearbeitet und daraus Bilder der Zeichen isoliert. Anschließend erfolgt eine Digitalisierung der isolierten Zeichen, wobei alle von der Videokamera aufgenommenen Bildpunkte, die heller bzw. dunkler als eine bestimmte Digitalisierungsschwelle sind, mit logisch "1" bzw. logisch "0" codiert werden. Diese digitalisierten und isolierten Bilder der Zeichen können nun von der Zeichenerkennungseinrichtung weiterverarbeitet werden und in digital codierte Zeichen, vorzugsweise im ASCII-Code umgesetzt werden.

Die erfindungsgemäße Aufnahme von zwei solchen Bildern kann vorzugsweise von zwei Videokameras vorgenommen werden, die beispielsweise aus unterschiedlichen Blickwinkeln die zeichentragenden Objekte aufnehmen. Damit hat man die Chance, bei einem nicht perfekten Bild der einen Kamera (beispielsweise durch eine störende Spiegelung) doch noch von der anderen Kamera ein brauchbares Bild zu erhalten und verwerten zu können. Bei Kraftfahrzeugen bietet sich die besonders vorteilhafte Möglichkeit, sowohl die vordere als auch die hintere Nummerntafel aufzunehmen. Man kann dann auch noch bei vollständiger oder teilweiser Unlesbarkeit des einen oder anderen Numernschildes eine hohe Erkennungsrate erzielen. Grundsätzlich ist es auch möglich, die beiden Bilder mit einer einzigen Kamera zeitlich hintereinander aufzunehmen. Dies ist vor allem bei bewegten Objekten zielführend. Wenn eine der beiden Aufnahmen beispielsweise durch störende Lichtverhältnisse gestört ist, hat man immer noch die andere Aufnahme zur Verfügung.

Grundsätzlich kann man noch höhere Erkennungsraten mit mehr als zwei Kameras erzielen. Hier muß man allerdings in der Praxis eine Abwägung zwischen dem angestellten technischen Aufwand und der gewünschten Erkennungsrate treffen.

Zum Isolieren der Bilder der zu erfassenden Zeichen aus dem gesamten Grauwertbild ist es günstig, wenn das Grauwertbild zunächst, vorzugsweise zeilenweise, auf vorbestimmte, für Zeichen relativ zum Hintergrund typische Helligkeitsverteilungen untersucht wird und damit ein Ausschnitt des Gesamtbildes festgelegt wird, in welchem Ausschnitt die zu erfassenden Zeichen vorkommen. Beim Erfassen von Nummernschildern von Kraftfahrzeugen sind beispielsweise typische Zeichengrößen und Zeichenbreiten, sowie relative Helligkeiten der Zeichen zum Tafelhintergrund bekannt. Diese Informationen können verwendet werden, um einen groben Ausschnitt zu definieren, in dem die Zeichen vorkommen. Als nächster Schritt kann dann bevorzugt die Helligkeitsverteilung im Ausschnitt ermittelt werden (Erstellung eines Helligkeitshistogramms über beispielsweise 256 Arbeitsstufen). Aus dieser Helligkeitsverteilung, welche im allgemeinen zwei Maxima, nämlich von den Schriftzeichen und vom Hintergrund aufweist, läßt sich eine zwischen diesen beiden Maxima liegende Digitalisierungsschwelle ermitteln, mit der später die Digitalisierung der Zeichen zur Übergabe an die Zeichenerkennungseinrichtung erfolgt.

Bei Nummerntafeln von Kraftfahrzeugen stellt sich zunächst das Problem, daß es helle Nummerntafeln mit dunkler Schrift und dunkle Nummerntafeln mit heller Schrift gibt. Um damit Probleme bei der späteren Auswertung zu vermeiden, kann vorgesehen sein, daß die Art des Hintergrundes ermittelt wird, und daß bei gegenüber dem Hintergrund helleren Zeichen und bei gegenüber dem Hintergrund dunkleren Zeichen, eines der beiden digitalisierten Bilder der Zeichen samt Hintergrund invertiert wird, sodaß das Zeichenerkennungsverfahren immer helle Zeichen auf dunklem Hintergrund oder alternativ immer dunkle Zeichen auf hellem Hintergrund verarbeitet. Damit kann das Zeichenerkennungsverfahren immer dieselbe Art von Zeichen, beispielsweise dunkle Zeichen auf hellem Hintergrund verarbeiten, auch wenn das ursprüngliche Kennzeichen des Kraftfahrzeuges helle Zeichen auf dunklem Hintergrund aufgewiesen hat.

Vor der Übergabe der Zeichen an das Zeichenerkennungsverfahren ist es günstig, wenn die Zeichenfolge noch weiter eingegrenzt wird, um beispielsweise Störeffekte von den Rändern der Nummernschilder von Kraftfahrzeugen eliminieren zu können.

Die erfindungsgemäße Einrichtung hat zahlreiche Einsatzgebiete. Beispielsweise ist es möglich, eine Datenbank vorzusehen, in der bestimmte Zeichenfolgen abgespeichert sind. Eine Vergleichseinrichtung kann dann feststellen, ob die jeweils erfaßte und in binär codierter Form vorliegende Zeichenfolge mit einer abgespeicherten Zeichenfolge übereinstimmt. Ist dies der Fall, so kann eine Freigabeoperation, zum Beispiel die Öffnung eines Schrankens zur Zu- bzw. Durchfahrtsberechtigung erfolgen. Damit läßt sich beispielsweise der Schranken einer Mautstelle für Jahreskartenbesitzer automatisch öffnen. Auch die Zufahrt in Parkhäuser für Dauerabonnenten, deren Autonummern abgespeichert sind, kann automatisch und ohne das bisher übliche Einstecken von Magnetkarten erfolgen. Weitere Anwendungen sind beispielsweise die Verkehrszählung, Radar- und Rotlichtüberwachungen, oder die Diebstahlsvorbeugung, indem an den Grenzen die Nummern der durchfahrenden Autos auf gestohlen gemeldete Kennzeichen überprüft werden.

Um einen größeren Bildbereich erfassen zu können, wäre es theoretisch denkbar, bestimmte Objektive und speziell hochauflösende Kameras einzusetzen. Diese sind jedoch teuer und im allgemeinen nicht über einen elektronischen Shutter belichtungssteuerbar. Insbesondere, wenn man die relativ kostengünstigen und shutterfähigen Schwarz-weiß-Kameras einsetzen will, besteht zur Erweiterung des Bildbereiches die Möglichkeit, daß zumindest zwei Videokameras derart angeordnet und ausgerichtet sind, daß sie teilweise überlappende Bilder aufnehmen.

Ein Problem beim Einsatz im Freien besteht in der Belichtungssteuerung, die insbesondere von den Tageszeiten und Wetterbedingungen abhängt. Dabei kommt es nicht auf die gesamte Helligkeit des erfaßten Bildabschnittes an, sondern vielmehr auf die Helligkeit jener Bereiche, in denen die zu erfassenden Schriftzeichen auftreten. Diese Erkenntnis kann man sich zunutze machen und gemäß einer Variante der Erfindung die Videokamera über eine Belichtungssteuerung in Abhängigkeit von der Helligkeit des die zu erfassenden Zeichen enthaltenden Ausschnittes des Grauwertbildes steuern. Es erfolgt also eine dynamische Festlegung jenes Bereiches im Grauwertbild, der dann die Belichtungssteuerung vornimmt.

Die Belichtungssteuerung mißt also nicht die gesamte Helligkeit des Objektes bzw. des aufgenommenen Bildes, sondern selektiv die Helligkeit jenes Ausschnittes, der die zu erfassenden Zeichen enthält. Die Belichtungssteuerung reagiert somit nicht auf "schwarze" oder "weiße" Autos (Umfelder der Zeichen) in unerwünschter Weise, sondern lediglich auf spezielle Helligkeiten des Bildausschnittes mit den Zeichen. Da diese Helligkeit im allgemeinen nur von der Tageszeit bzw. Wettersituation abhängt und sich damit nicht allzu schnell ändert, ist es günstig (um "nervöse" Reaktionen der Belichtungssteuerung zu unterbinden) eine mittlere Helligkeit über einen besimmten Zeitraum zu erfassen und dann in Abhängigkeit von dieser mittleren Helligkeit die Belichtung zu steuern.

Weitere Vorteile und Einzelheiten der Erfindung werden in der nachfolgenden Figurenbeschreibung näher erläutert.

Es zeigen:
- Fig. 1: ein schematisches Ausführungsbeispiel der erfindungsgemäßen Einrichtung in einem Blockschaltbild,
- Fig. 2: eine Darstellung der Verfahrensschritte bei einem Ausführungsbeispiel der Erfindung in einem schematischen Flussdiagramm,
- Fig. 3: eine Datenbank mit Vergleichseinrichtung zur Öffnung eines Schrankens,
- Fig. 4: eine Ausführungsform mit zwei Videokameras, die zwei verschiedene aber inhaltlich gleiche Nummernschilder eines Fahrzeuges aufnehmen,
- Fig. 5: zwei Videokameras, die dasselbe Nummernschild eines Fahrzeuges aufnehmen,
- Fig. 6: eine einzige Videokamera, die hintereinander zwei Bilder des Nummernschildes eines Fahrzeuges aufnimmt,
- Fig. 7: eine Anordnung mit vier Videokameras,
- Fig. 8: die Überlappung der Bilder, der von den in Fig. 7 vier Videokameras aufgenommenen Bilder,
- Fig. 9: schematisch eine Einrichtung zur Belichtungssteuerung.

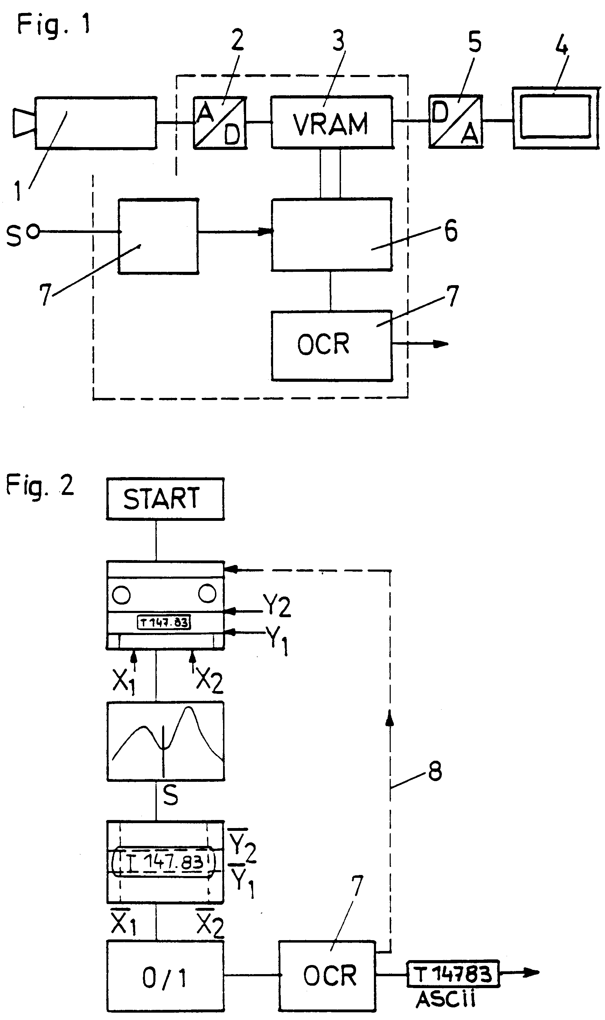

In Fig. 1 ist eine Schwarz-weiß-Videokamera (beispielsweise eine CCD-Kamera der Firma Grundig F 85-1 oder Pulnix 6 EX) gezeigt, deren Fernsehsignal über einen Analog-Digitalwandler einem Videospeicher zur Abspeicherung von 512x512 Bildpunkten in 256 Grauwertstufen zugeführt wird. Über einen Kontrollbildschirm 4 und einen Digital-Analogwandler 5 ist der Inhalt des Videospeichers 3 am Bildschirm anzeigbar. Der Videospeicher 3 wird von einem speziellen Graphikprozessor (Texas-Instruments 34010) adressiert und das darin gespeicherte Grauwertbild gemäß einem im Programmspeicher 7 abgelegten Programm analysiert. Über einen Sensor S kann das Festhalten einer Momentaufnahme im Videospeicher 3 und der anschließende Start des Programms zur Abarbeitung des gespeicherten Grauwertbildes festgelegt werden. Der Sensor S kann beispielsweise eine Lichtschranke oder eine Induktionsschleife sein, der bei einem bewegten Objekt, beispielsweise bei einem Fahrzeug feststellt, wann sich dieses an einer bestimmten zur Aufnahme von der Videokamera geeigneten Stelle befindet.

Die Abarbeitung des Grauwertbildes durch den Videoprozessor 6 und der Steuerung gemäß dem Programm 7 kann beispielsweise die in Fig. 2 dargestellten Verfahrensschritte umfassen.

Nach einem Start des Programms erfolgt zunächst die Groblokalisierung des die zu erfassenden Schriftzeichen enthaltenden Bereiches des gesamten Arbeitsbildes, im vorliegenden Fall des Bereiches der Nummerntafel eines Fahrzeuges. Dazu kann der Videprozessor das gespeicherte Grauwertbild zeilenweise auf vorbestimmte und für die Zeichen auf Nummernschildern typische Helligkeitsverteilungen untersuchen. Die Einrichtung erkennt damit jenen Bereich, in dem die zu erfassenden Zeichen vorkommen und legt Grenzen X1, X2 bzw. in vertikaler Richtung Y1 und Y2 fest. In der Folge erfolgt im wesentlichen eine weitere Bearbeitung dieses nunmehr grob festgelegten Bereiches. Zunächst wird ein Helligkeitshistogramm aufgenommen, das zwei von den Schriftzeichen bzw. vom Nummernschildhintergrund herrührende Maxima aufweist. Zwischen den beiden Maxima kann dann eine für die spätere Digitalisierung benötigte Digitalisierungsschwelle festgelegt werden. Anschließend erfolgt eine Feinlokalisierung der Zeichen, wobei beispielsweise von der Mitte des grob lokalisierten Ausschnittes aus nach rechts und links, sowie nach oben und unten die äußersten Zeichenbegrenzungen ermittelt werden. Damit kann vermieden werden, daß beispielsweise die Ränder der Nummernschilder zu Störeffekten führen und insbesondere nicht als der Großbuchstabe "I" interpretiert werden. Der Ausschluß der Ränder ergibt sich beispielsweise daraus, daß diese eine größere Höhe aufweisen als der übrige Schriftzug.

Im nächsten Schritt werden alle Grauwerte oberhalb der Digitalisierungsschwelle S beispielsweise auf logisch "1" und alle Grauwerte unterhalb dieser Digitalisierungsschwelle auf logisch "0" gesetzt. Das nunmehr digitalisierte Bild der isolierten Zeichen wird nunmehr an die Zeichenerkennungseinrichtung (OCR) 7 übergeben, die beim vorliegenden Ausführungsbeispiel einen im ASCII-Code codierten String der Buchstaben und Ziffernfolge des Nummernschildes ausgibt. Ist eine Identifizierung durch die Zeichenerkennungseinrichtung relativ vorzugsweise programmgesteuert bzw. nur mit geringer Wahrscheinlichkeit möglich, so kann wie durch die strichlierte Linie 8 angedeutet, eine erneute Groblokalisierung im gesamten Grauwertbild erfolgen.

Der Videospeicher und der Videoprozessor können auf einer Steckkarte angeordnet sein, die in einen Aufnahmeschlitz eines Computers einsteckbar ist. Der Computer kann vorzugsweise eine industriecompatible Zentraleinheit (CPU) beispielsweise einen 80 386 SX Prozessor aufweisen. Das Zeichenerkennungsverfahren kann gemäß einem in einem Programmspeicher gespeicherten Programm auf diesem Computer ablaufen, wobei Kommunikationseinrichtungen, Schnittstellen und/oder Zwischenspeicher vorgesehen sein können, um die vom Videoprozessor isolierten Zeichen zu übernehmen und anschließend die binär codierten Zeichen auszugeben.

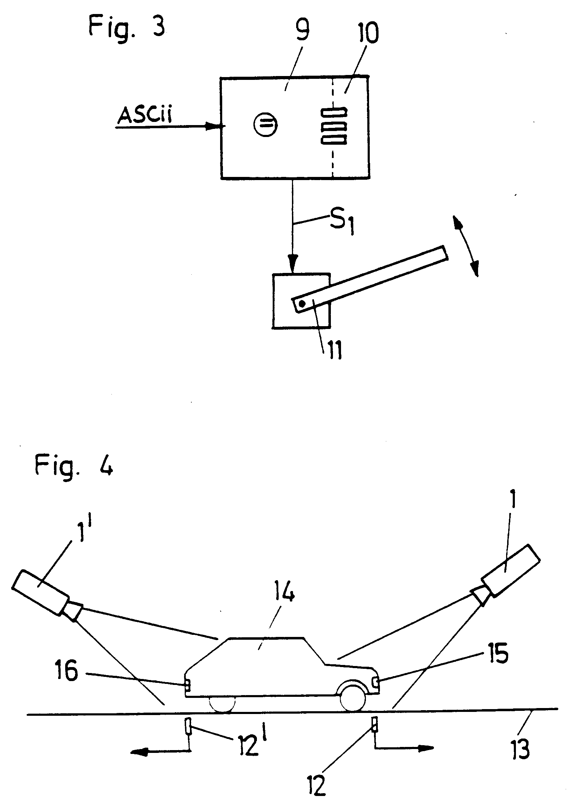

In Fig. 3 ist eine Vergleichseinrichtung gezeigt, die an die Bildauswerteinrichtung der Fig. 1 anschließbar ist. Die Vergleichseinrichtung 9 vergleicht den im ASCII-Code gelieferten Zeichenstring mit in einer Datenbank 10 abgespeicherten Strings. Bei Übereinstimmung erfolgt die Ausgabe eines Signales S1, das beispielsweise einen Schranken 11 öffnet.

Alternativ oder zusätzlich kann der jeweils ausgegebene Zeichenstring auf einer Anzeigeeinrichtung angezeigt werden. Dies ist vor allem für Kontrollzwecke günstig.

Um die Erfassung bewegter Objekte bzw. der darauf befindlichen Zeichen zu ermöglichen, ist bevorzugt vorgesehen, daß eine Einrichtung, beispielsweise eine Lichtschranke oder eine Induktionsschleife zur Erfassung der Lage des Objektes und zur Auslösung einer Momentbildaufnahme bei Erreichen einer vorbestimmten Lage vorgesehen ist. Eine derartige Einrichtung kann beispielsweise eine Induktionsschleife 12 bzw. 12' unterhalb der Fahrbahn 13 sein, auf der Kraftfahrzeuge 14 fahren, wie dies in Fig. 4 gezeigt ist. Da sich bei der Anwendung im Freien, wofür sich die erfindungsgemäße Einrichtung und das erfindungsgemäße Verfahren besonders gut eignen, immer wieder Störeffekte durch Schattenbildungen oder Verschmutzungen der zu erfassenden Zeichen auftreten, ist es günstig, wenn zwei Bilder aufgenommen werden und dann eine korrigierte Auswertung der beiden Bilder erfolgt. In Sonderfällen können auch mehr als zwei Bilder sinnvoll sein. Bei dem in Fig. 4 dargestellten Ausführungsbeispiel sind dazu zwei Videokameras 1;1' vorgesehen, die das vordere und hintere Kennzeichen 15, 16 des Fahrzeuges 14 aufnehmen, wobei die Induktionsschleife 12 die Videokamera 1 und die Induktionsschleife 12' die Videokamera 1' steuert. Wenn eines der beiden Kennzeichen durch Verschmutzung oder Schattenbildung eine Auswertung erschwert, so kann immer noch über das andere Zeichen eine zuverlässige Ermittlung des tatsächlichen Zeicheninhaltes erfolgen.

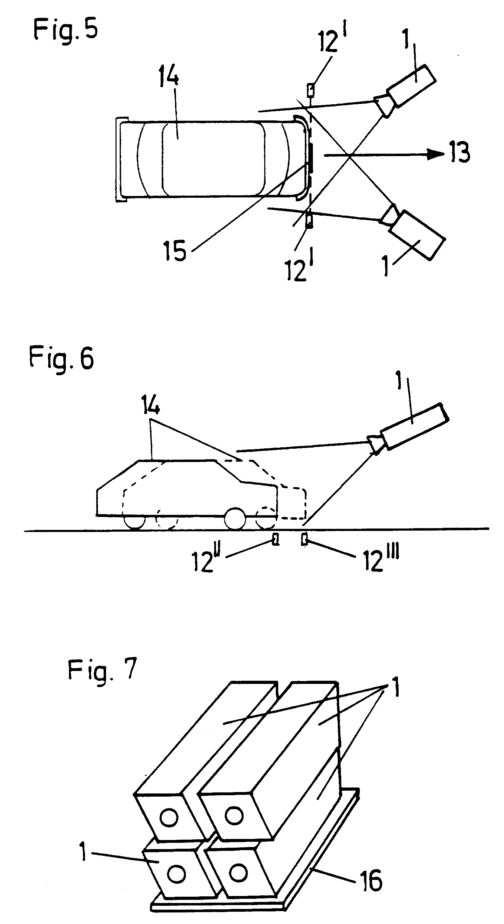

Bei dem in Fig. 5 dargestellten Ausführungsbeispiel sind die beiden Videokameras 1 seitlich der Fahrbahn 13 angeordnet und auf das vordere Kennzeichen 15 des Kraftfahrzeuges 14 gerichtet. Eine Lichtschranke 12' löst die Momentaufnahme durch die beiden Kameras aus. Auch mit dieser Anordnung läßt sich die Erkennungsrate weiter steigern. Beim erfindungsgemäßen Verfahren bzw. der erfindungsgemäßen Einrichtung läßt sich eine hohe Erkennungsrate im Bereich von ca. 90% bereits mit einer Kamera, beispielsweise bei der Erfassung von Nummernschildern von Fahrzeugen erzielen.

Mit mehreren Kameras kann diese Erkennungsrate noch weiter gesteigert werden.

Die Aufnahme zweier Bilder kann auch mittels einer einzigen Kamera 1' erfolgen. Wenn sich das Kraftfahrzeug über den Sensor 12' bewegt, erfolgt die erste Momentbildaufnahme, beim Sensor 12''' erfolgt die zweite Momentaufnahme.

Schließlich wäre auch denkbar, eine Farbvideokamera einzusetzen und die drei Einzelbilder der Grundfarben als gesonderte Bilder weiterzuverarbeiten. Diese Art und Form geht von der Überlegung aus, daß sich Störungen unter Umständen nicht in allen Farben gleich auswirken, sodaß zumindest in einer Farbe eine sichere Erkennung der Zeichen möglich ist.

Die Bildauswerteinrichtung kann die zwei (oder mehreren) Bilder günstigerweise korreliert auswerten. Wenn zwei bestimmte Zeichen in beiden Bildern von der Schrifterkennungslogik (OCR) als dieselben erkannt werden, dann erfolgt natürlich die Ausgabe dieses erkannten Zeichens. Wenn aber die Schrifterkennungslogik z.B. in einem Bild eher ein "D" erkennt und im zweiten Bild eher ein "O", also verschiedene Zeichen, so wird das ingesamt wahrscheinlichere Zeichen als Ergebnis ausgegeben. Wenn also im obigen Beispiel die OCR-Logik das Zeichen im ersten Bild wahrscheinlichkeitsmäßig mit 60% "D" und 40% "O" bewertet, im zweiten Bild aber zu 95% ein "O" und nur zu 5% ein "D" erkennt, so wird insgesamt ein "O" als Ergebnis ausgegeben.

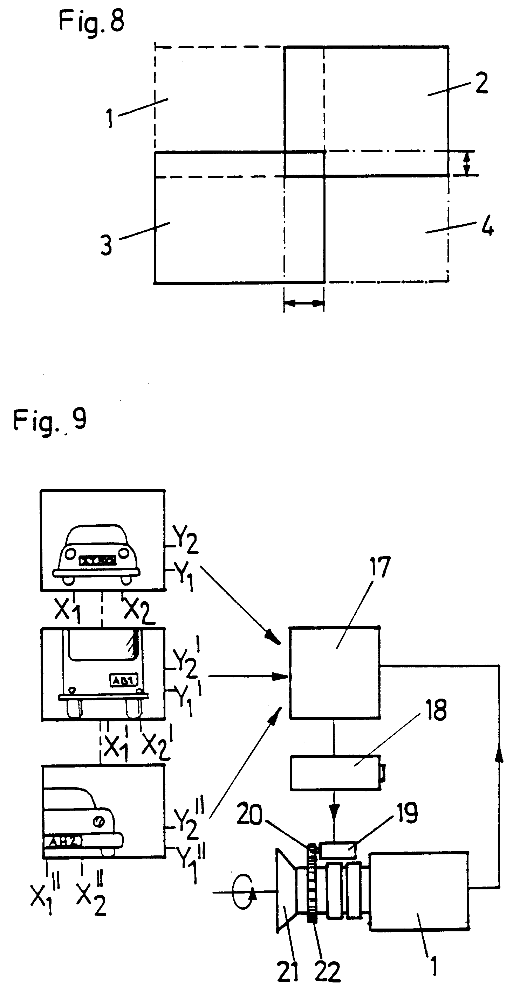

Bei dem in Fig. 7 dargestellten Ausführungsbeispiel sind vier Videokameras vorgesehen, die vier überlappende Bilder 1/2/3/4 gemäß Fig. 8 aufnehmen. Damit die zu erfassende Zeichenfolge sicher zumindest in einem der vier Bildbereiche 1/bis/4 zur Gänze enthalten ist, ist vorgesehen, daß der Überlappungsbereich der Bilder größer gewählt ist, als die maximal erwartete Auszählung der Zeichenfolge. Über eine nicht dargestellte Haltevorrichtung können die Videokameras zueinander und dann die gesamte Trägerplatte 16 mit allen Kameras verstellt werden.

Bei der in den Fig. 7 und 8 dargestellten Ausführungsform ist es günstig, wenn die Bilder praktisch gleichzeitig, vorzugsweise innerhalb von 100 Millisekunden aufgenommen werden.

In Fig. 9 sind beispielsweise drei verschiedene Lagen von Nummernschildern gezeigt. Es wird jeweils unabhängig von der Gesamthelligkeit des Bildes die Helligkeit des Ausschnittes erfaßt, in dem sich das Nummernschild befindet. Kurzzeitige Helligkeitsschwankungen sollen nicht in die Belichtungssteuerung eingehen, deshalb ist vorgesehen, über einen bestimmten Zeitraum einen Mittelwert zu bilden und die Belichtungssteuerung in Abhängigkeit von diesem Mittelwert vorzunehmen. Beim Einsatz im Freien kann der Zeitraum relativ groß, beispielsweise eine Minute, vorzugsweise sogar mehr als zehn Minuten betragen. Man hat daher eine sehr träge Belichtungssteuerung, die dem Umstand Rechnung trägt, daß sich die Belichtungsverhältnisse auf Grund der Wetter- und Tageszeitbedingungen auch nur relativ langsam ändern. Damit werden zu nervöse Reaktionen der Belichtungssteuerung vermieden. Die erfindungsgemäße Einrichtung 17 ermittelt also zunächst grob jenen Bereich, in dem die zu erfassenden Schriftzeichen vorkommen und dann die Helligkeit dieses Bereiches. Diese Helligkeit wird an eine Belichtungssteuerung 18 gegeben, die dann den Mittelwert bildet und in Abhängigkeit vom Mittelwert über einen Motor 19 und ein Ritzel 20 den Blendenring 21 über einen Zahnkranz 22 verstellt. Gegenüber der elektronischen Shuttersteuerung hat die Blendenregelung den Vorteil, daß auch bei hohen Lichtmengen keine Störeffekte in den Grauwertbildern auftreten, weil die auf den CCD-Chip gelangende Lichtmenge immer im wesentlichen konstant und beschränkt ist.

## Patentansprüche

1. Einrichtung zur Erfassung von Bildzeichen auf Objekten, insbesondere von Buchstaben und Ziffern auf Nummernschildern von Kraftfahrzeugen, mit einer Aufzeichnungseinrichtung zum Aufzeichnen eines die Bildzeichen enthaltenden Bildes, vorzugsweise Grauwertbildes, wobei die Aufzeichnungseinrichtung zumindest eine Videokamera aufweist, die an eine automatische Bildauswertschaltung angeschlossen ist, wobei die Einrichtung derart ausgebildet oder gesteuert ist, daß sie vom selben Objekt zumindest zwei Bilder aufnimmt und in der Bildauswertschaltung auswertet, und die Einrichtung eine Zeichenerkennungseinrichtung zum Umsetzen der Bildzeichen in den Bildern in digital kodierte Bildzeichen umfaßt, **dadurch gekennzeichnet**, daß die Zeichenerkennungseinrichtung für jedes Bildzeichen in den zwei oder mehreren Bildern jeweils die Wahrscheinlichkeit bewertet, mit der das Bildzeichen mit einem oder mehreren digital kodierten Zeichen übereinstimmt, und daß die Zeichenerkennungseinrichtung zu jedem Bildzeichen jenes digital kodierte Zeichen ausgibt, bei dem die Summe der Wahrscheinlichkeiten aus den zwei oder mehreren Bildern am Größten ist.

2. Einrichtung nach Anspruch 1, **dadurch gekennzeichnet,** daß eine Steuereinrichtung vorgesehen ist, die die Aufnahme bei bewegten Objekten mit den zu erfassenden Zeichen an zwei verschiedenen Stellen des Objektes in Abhängigkeit von einem Sensor, z.B. Lichtschranken, Induktionsschleife, steuert.

3. Einrichtung nach Anspruch 1 oder 2, **dadurch gekennzeichnet,** daß die Videokamera eine Farbvideokamera ist, wobei die Bildauswertschaltung die drei Einzelbilder der Grundfarben als gesonderte Bilder weiterverarbeitet.

4. Einrichtung nach einem der Ansprüche 1 bis 3, **dadurch gekennzeichnet,** daß der Videospeicher und der Videoprozessor auf einer Steckkarte angeordnet sind, die in den Aufnahmeschlitz eines mit einer vorzugsweise industriestandardkompatiblen Zentraleinheit ausgestatteten Computers einsteckbar ist, und daß die Zeichenerkennungseinrichtung, die Zentraleinheit die einen Arbeitsspeicher, einen Programmspeicher, gemäß dessen Zeichenerkennungsprogramm die Zentraleinheit arbeitet, sowie Einrichtungen zur Übernahme der vom Videoprozessor isolierten Zeichen und zur Ausgabe der daraus ermittelten binär kodierten Zeichen umfaßt.

5. Einrichtung nach einem der Ansprüche 1 bis 4, **dadurch gekennzeichnet,** daß die Bildauswertschaltung an eine veränderbare Datenbank und eine Vergleichseinrichtung angeschlossen ist, welche den von der Bildauswertschaltung ausgegebenen Zeichenstring mit Zeichenstrings aus der Datenbank vergleicht und bei Übereinstimmung ein entsprechendes Signal abgibt und damit vorzugsweise einen Schranken od. dgl. öffnet.

6. Einrichtung nach einem der Ansprüche 1 bis 5, **dadurch gekennzeichnet,** daß die Bildauswertschaltung an eine Anzeigeeinrichtung zur Anzeige des erfaßten Zeichenstrings angeschlossen ist.

7. Einrichtung nach einem der Ansprüche 1 bis 6, **dadurch gekennzeichnet,** daß die Einrichtung über ein Netzwerk und Schnittstellen an einen räumlich entfernten Host-Rechner angeschlossen ist.

8. Einrichtung nach einem der Ansprüche 1 bis 7, **dadurch gekennzeichnet,** daß die Bildauswertschaltung aufweist:
- einen Videospeicher zum Zwischenspeichern des von der Videokamera aufgenommenen Bildes,
- einen Videoprozessor zum Analysieren des gespeicherten Bildes und zum Isolieren von Bildern der Zeichen aus dem Bild,
- eine Zeichenerkennungseinrichtung zum Umsetzen der vom Videoprozessor isolierten Zeichen in digital, vorzugsweise im ASCII-Code, kodierten Zeichen bzw. Zeichenfolgen.

9. Einrichtung nach einem der Ansprüche 1 bis 8, **dadurch gekennzeichnet,** daß vier Videokameras, in einem Viereck, je zwei übereinander, je zwei seitlich nebeneinander vorgesehen sind.

10. Einrichtung nach Anspruch 9, **dadurch gekennzeichnet,** daß die Videokameras auf einer Haltevorrichtung relativ zueinander und gemeinsam als Einheit verstellbar angeordnet sind.

11. Einrichtung nach Anspruch 9 oder 10, **dadurch gekennzeichnet,** daß der Überlappungsbereich der Bilder größer gewählt ist als die maximal erwartete Ausdehnung der Zeichenfolge.

12. Einrichtung nach einem der Ansprüche 9 bis 11, **dadurch gekennzeichnet,** daß die Einrichtung derart gesteuert ist, daß die Bilder aller Videokameras innerhalb von 100 msec aufgenommen werden.

13. Einrichtung nach einem der Ansprüche 3 bis 12, **dadurch gekennzeichnet,** daß die Videokamera eine Belichtungssteuerung aufweist, welche in Abhängigkeit von der Helligkeit des die zu erfassenden Bildzeichen enthaltenen Ausschnittes des Bildes die Belichtung steuert.

14. Einrichtung nach einem der Ansprüche 1 bis 13, **dadurch gekennzeichnet,** daß die Videokamera einen extern einstellbaren elektronischen Shutter aufweist, über den eine Belichtungsregelung durchführbar ist.

15. Einrichtung nach Anspruch 14, **dadurch gekennzeichnet,** daß die Belichtungssteuerung in Abhängigkeit von der über einen vorbestimmten Zeitraum ermittelten mittleren Helligkeit der Zeichenausschnitte mehrerer Objekte erfolgt.

16. Einrichtung nach Anspruch 15, **dadurch gekennzeichnet,** daß der Zeitraum mehr als 1 Minute, vorzugsweise mehr als 10 Minuten beträgt.

17. Einrichtung nach einem der Ansprüche 14 bis 16, **dadurch gekennzeichnet,** daß die Videokamera eine verstellbare Blende aufweist und die Belichtungssteuerung über eine Stelleinrichtung die Blende verstellt.

18. Einrichtung nach Anspruch 18, **dadurch gekennzeichnet,** daß die Stelleinrichtung einen Elektromotor umfaßt, der den Blendenring, vorzugsweise über eine Ritzel-Zahnkranz-Kombination verstellt.

## Claims

1. Device for the registration of graphic symbols on objects, in particular of letters and numerals on number-plates of motor vehicles, with a recording device for recording an image, preferably a grey-value image, containing the graphic symbols, said recording device exhibiting at least one video camera which is connected to an automatic image-evaluation circuit, said device being designed or controlled in such a manner that it records at least two images of the same object and evaluates them in the image-evaluation circuit, and said device comprising a symbol-recognition device for converting the graphic symbols in the images into digitally coded graphic symbols, **characterised in that** for each graphic symbol in the two or more images the symbol-recognition device evaluates the probability with which the graphic symbol coincides with one or more digitally coded symbols, and in that with respect to each graphic symbol the symbol-recognition device outputs that digitally coded symbol in respect of which the sum of the probabilities derived from the two or more images is greatest.

2. Device according to Claim 1, **characterised in that** a control device is provided which controls the recording in the case of moving objects having the symbols to be registered at two different points pertaining to the object in a manner depending on a sensor, for example a light barrier, an induction loop.

3. Device according to Claim 1 or 2, **characterised in that** the video camera is a colour video camera, whereby the image-evaluation circuit subjects the three individual images in the primary colours to further processing as separate images.

4. Device according to one of Claims 1 to 3, **characterised in that** the video memory and the video processor are arranged on a plug-in card which is capable of being inserted into the mounting slot of a computer equipped with a preferably industry-standard-compatible central processing unit, and in that the symbol-recognition device the central processing unit which comprises a working memory, a program memory, according to the symbol-recognition program of which the central processing unit operates, as well as devices for acceptance of the symbols isolated by the video processor and for output of the binary-coded symbols ascertained from said symbols.

5. Device according to one of Claims 1 to 4, **characterised in that** the image-evaluation circuit is connected to a changeable database and to a comparator which compares the symbol-string that is output by the image-evaluation device with symbol-strings from the database and in the event of agreement emits an appropriate signal and thereby preferably opens a barrier or such like.

6. Device according to one of Claims 1 to 5, **characterised in that** the image-evaluation circuit is connected to a display device for display of the symbol-strings registered.

7. Device according to one of Claims 1 to 6, **characterised in that** the device is connected to a spatially remote host computer via a network and interfaces.

8. Device according to one of Claims 1 to 7, **characterised in that** the image-evaluation circuit exhibits:
- a video memory for temporarily storing the image recorded by the video camera,
- a video processor for analysing the stored image and for isolating images of the symbols from the image,
- a symbol-recognition device for converting the symbols isolated by the video processor into digitally coded - preferably in ASCII code - symbols or strings of symbols.

9. Device according to one of Claims 1 to 8, **characterised in that** four video cameras are provided in a quadrangle, the cameras of each of two pairs being arranged one above the other and the cameras of each of two pairs being arranged laterally alongside one another.

10. Device according to Claim 9, **characterised in that** the video cameras are arranged on a retaining device in such a manner as to be adjustable relative to one another and jointly as a unit.

11. Device according to Claim 9 or 10, **characterised in that** the overlapping region of the images is chosen to be larger than the maximum expected extent of the string of symbols.

12. Device according to one of Claims 8 to 11, **characterised in that** the device is controlled in such a manner that the images of all the video cameras are recorded within 100 msec.

13. Device according to one of Claims 3 to 12, **characterised in that** the video camera exhibits an exposure control which controls the exposure as a function of the brightness of the section of the image contained the graphic symbol to be registered.

14. Device according to one of Claims 1 to 13, **characterised in that** the video camera exhibits an externally adjustable electric shutter, via which an exposure control is capable of being implemented.

15. Device according to Claim 14, c**haracterised in that** the exposure control is effected as a function of the mean brightness, ascertained over a predetermined time-interval, of the symbol-sections of several objects.

16. Device according to Claim 15, **characterised in that** the time-interval amounts to more than 1 minute, preferably more than 10 minutes.

17. Device according to one of Claims 14 to 16, **characterised in that** the video camera exhibits an adjustable diaphragm and the exposure control adjusts the diaphragm via an adjusting device.

18. Device according to Claim 17**, characterised in that** the adjusting device comprises an electric motor which adjusts the diaphragm ring, preferably via a pinion/toothed-rim combination.

## Revendications

1. Dispositif pour l'acquisition de symboles graphiques sur des objets, en particulier de lettres et de chiffres sur des plaques d'immatriculation de véhicules automobiles, avec un dispositif d'enregistrement pour enregistrer une image contenant les symboles graphiques, de préférence une image en niveaux de gris, le dispositif d'enregistrement présentant au moins une caméra vidéo qui est connectée à un circuit automatique d'évaluation d'image, le dispositif étant réalisé ou commandé de telle sorte qu'il enregistre au moins deux images du même objet et les évalue dans le dispositif d'évaluation d'image, et le dispositif comprenant un dispositif de reconnaissance de symboles pour convertir les symboles graphiques des images en symboles graphiques codés de façon numérique, caractérisé en ce que le dispositif de reconnaissance de symboles évalue respectivement pour chaque symbole graphique sur les deux ou plusieurs images la probabilité avec laquelle le symbole graphique correspond à un ou plusieurs symboles codés de façon numérique, et en ce que le dispositif de reconnaissance de symboles délivre pour chaque symbole graphique celui des symboles codés de façon numérique, pour lequel la somme des probabilités basée sur les deux ou plusieurs images est la plus grande.

2. Dispositif selon la revendication 1, caractérisé en ce qu'un dispositif de commande, qui commande la prise de vue pour des objets mobiles portant les symboles à acquérir en deux endroits différents de l'objet en fonction d'un capteur, par exemple un barrage photoélectrique, une boucle à induction, est prévu.

3. Dispositif selon la revendication 1 ou 2, caractérisé en ce que la caméra vidéo est une caméra vidéo couleur, le circuit d'évaluation d'image traitant les trois images individuelles des couleurs de base comme des images distinctes.

4. Dispositif selon l'une quelconque des revendications 1 à 3, caractérisé en ce que la mémoire vidéo et le processeur vidéo sont disposés sur une carte d'extension, qui peut être enfichée dans le connecteur d'un ordinateur équipé de préférence d'une unité centrale compatible avec la norme industrielle, et en ce que le dispositif de reconnaissance de symboles comprend l'unité centrale, qui comprend une mémoire de travail, une mémoire de programme selon le programme de reconnaissance de symboles à partir duquel fonctionne l'unité centrale, ainsi que des dispositifs pour le transfert des symboles isolés par le processeur vidéo et pour la sortie des symboles codés de façon binaire déterminés à partir de ceux-ci.

5. Dispositif selon l'une quelconque des revendications 1 à 4, caractérisé en ce que le circuit d'évaluation d'image est relié à une base de données variable et un comparateur qui compare la chaîne de symboles délivrée par le circuit d'évaluation d'image à des chaînes de symboles provenant de la base de données et délivre un signal correspondant en cas de concordance et ouvre ainsi de préférence une barrière ou similaire.

6. Dispositif selon l'une quelconque des revendications 1 à 5, caractérisé en ce que le circuit d'évaluation d'image est relié à un dispositif d'affichage pour afficher la chaîne de symboles détectée.

7. Dispositif selon l'une quelconque des revendications 1 à 6, caractérisé en ce que le dispositif est relié par l'intermédiaire d'un réseau et d'interfaces à un calculateur-hôte distant.

8. Dispositif selon l'une quelconque des revendications 1 à 7, caractérisé en ce que le circuit d'évaluation d'image présente :
- une mémoire vidéo pour tamponner l'image enregistrée par la caméra vidéo,
- un processeur vidéo pour analyser l'image mémorisée et pour isoler des images de symboles à partir de l'image,
- un dispositif de reconnaissance de symboles pour convertir les symboles isolés par le processeur vidéo en symboles ou chaînes de symboles codés de façon numérique, de préférence en code ASCII.

9. Dispositif selon l'une quelconque des revendications 1 à 8, caractérisé en ce que quatre caméras vidéo sont prévues, dans un rectangle, respectivement deux superposées, respectivement deux latéralement côte à côte.

10. Dispositif selon la revendication 9, caractérisé en ce que les caméras vidéo sont disposées sur un dispositif de support de façon réglable l'une par rapport à l'autre et ensemble comme une unité.

11. Dispositif selon la revendication 9 ou 10, caractérisé en ce que la zone de recouvrement des images est choisie pour être plus grande que l'étendue maximale attendue de la chaîne de symboles.

12. Dispositif selon l'une quelconque des revendications 9 à 11, caractérisé en ce que le dispositif est commandé de telle sorte que les images de toutes les caméras vidéo sont enregistrées en 100 ms.

13. Dispositif selon l'une quelconque des revendications 3 à 12, caractérisé en ce que la caméra vidéo présente une commande d'exposition qui commande l'exposition en fonction de la luminosité de la fenêtre de l'image contenant les symboles à acquérir.

14. Dispositif selon l'une quelconque des revendications 1 à 13, caractérisé en ce que la caméra vidéo présente un obturateur électronique réglable de l'extérieur qui permet d'effectuer le contrôle d'exposition.

15. Dispositif selon la revendication 14, caractérisé en ce que la commande d'exposition est effectuée en fonction de la luminosité moyenne des fenêtres de symboles de plusieurs objets, déterminée sur une période prédéterminée.

16. Dispositif selon la revendication 15, caractérisé en ce que la période s'élève à plus de 1 minute, de préférence à plus de 10 minutes.

17. Dispositif selon l'une quelconque des revendications 14 à 16, caractérisé en ce que la caméra vidéo présente un diaphragme ajustable et la commande d'exposition ajuste le diaphragme par l'intermédiaire d'un dispositif de réglage.

18. Dispositif selon la revendication 17, caractérisé en ce que le dispositif de réglage comprend un moteur électrique qui ajuste la bague de diaphragme, de préférence par l'intermédiaire d'une combinaison pignon/couronne dentée.
